# FASCICULE DE BREVET EUROPEEN

(11) **EP 1 562 867 B1**
(45) Date de publication et mention de la délivrance du brevet: **06.09.2006**
(21) Numéro de dépôt: 03796113.3
(22) Date de dépôt: 21.11.2003
(51) Int. Cl.: C02F 1/44, C02F 1/28, C02F 3/12

(54) **PRODEDE DE TRAITEMENT DES EAUX A L'AIDE D'UN REACTIF PULVERULENT INORGANIQUE A FORTE SURFACE SPECIFIQUE INCLUANT UNE ETAPE DE RECYCLAGE DUDIT REACTIF**
WASSERBEHANDLUNGSVERFAHREN UNTER VERWENDUNG EINES ANORGANISCHEN PULVERFÖRMIGEN REAGENZES MIT GROSSER SPEZIFISCHER OBERFLÄCHE MIT EINEM REAGENZIENRÜCKFÜHRSCHRITT
WATER TREATMENT METHOD USING AN INORGANIC POWDER REAGENT WITH HIGH SPECIFIC SURFACE AREA INCLUDING A STEP OF RECYCLING SAID REAGENT

(30) Priorité: 22.11.2002 FR 0214697
(43) Date de publication de la demande: 17.08.2005
(73) Titulaire: OTV SA, 94417 Saint-Maurice Cedex (FR)
(72) Inventeur: GAID, Abdelkader, F-75014 PARIS (FR); UYTTEWAAL, Mickael, F-94100 Saint-Maur Des Fosses (FR); TAZI-PAIN, Annie, F-92600 Asnières (FR)
(74) Mandataire: Larcher, Dominique
(86) Numéro de dépôt international: PCT/FR2003/003455
(87) Numéro de publication internationale: WO 2004/048277

(56) Documents cités:
- FR-A- 2 737 202
- FR-A- 2 770 210
- US-A- 4 956 093
- US-A- 5 364 534
- PATENT ABSTRACTS OF JAPAN vol. 018, no. 601 (C-1274), 16 novembre 1994 (1994-11-16) & JP 06 226294 A (HITACHI PLANT ENG & CONSTR CO LTD), 16 août 1994 (1994-08-16)
- MEIER J ET AL: "Nanofiltration and adsorption on powdered adsorbent as process combination for the treatment of severely contaminated waste water" DESALINATION, ELSEVIER SCIENTIFIC PUBLISHING CO, AMSTERDAM, NL, vol. 146, no. 1-3, 10 septembre 2002 (2002-09-10), pages 361-366, XP004386380 ISSN: 0011-9164
- HAGEN K: "Removal of particles, bacteria and parasites with ultrafiltration for drinking water treatment" DESALINATION, ELSEVIER SCIENTIFIC PUBLISHING CO, AMSTERDAM, NL, vol. 119, no. 1-3, 20 septembre 1998 (1998-09-20), pages 85-91, XP004139108 ISSN: 0011-9164
- PATENT ABSTRACTS OF JAPAN vol. 2002, no. 11, 6 novembre 2002 (2002-11-06) & JP 2002 192184 A (KUBOTA CORP), 10 juillet 2002 (2002-07-10)

## Description

L'invention concerne le domaine du traitement des eaux. Plus précisément, l'invention concerne un procédé physico-chimique de traitement des eaux incluant une étape de mise en contact des eaux avec un réactif pulvérulent inorganique à forte surface spécifique permettant d'abattre notamment leur teneur en matières organiques.

L'invention s'applique tant aux procédés de potabilisation qu'aux procédés d'épuration des eaux et peut s'appliquer à titre indicatif au traitement d'une eau de belle qualité ou en tant qu'affinage d'une eau déjà traitée dans une installation existante.

Dans le domaine de l'invention, il est connu, pour traiter une eau contenant des polluants en solution, d'utiliser des agents réactifs pulvérulents tels que des adsorbants, ce traitement pouvant être, de façon également connue, combiné avec une étape d'ultrafiltration ou de microfiltration (voir par exemple le document de brevet US 5 364 534).

L'addition de ces réactifs s'effectue le plus souvent en même temps que l'étape de clarification, ou en amont de moyens de filtration membranaires.

Bien entendu, ces réactifs pulvérulents présentent des caractéristiques physiques de dureté, d'abrasivité et de densité permettant leur fluidisation dans l'eau et les rendant compatibles avec les membranes de filtration utilisées.

Parmi les agents réactifs pulvérulents, on connaît notamment le charbon actif en poudre, dit CAP.

Le CAP est un adsorbant qui permet l'élimination des pesticides mais aussi de la matière organique dissoute.

Or, le CAP est un réactif coûteux, qui induit donc des coûts d'exploitation relativement importants.

En outre, la mise en oeuvre d'un tel réactif pulvérulent en amont de membranes d'ultrafiltration ou de microfiltration implique un inconvénient lié au colmatage des membranes par le réactif utilisé et/ou par les matières organiques.

L'invention a pour objectif de pallier les inconvénients de l'art antérieur.

Plus précisément, l'invention a pour objectif de proposer un procédé de traitement des eaux comprenant l'utilisation d'un réactif pulvérulent inorganique tel que mentionné précédemment et une étape de filtration membranaire, qui permette de diminuer les coûts d'exploitation.

L'invention a également pour objectif de fournir un tel procédé qui permet de réduire le colmatage des moyens de séparation membranaires.

L'invention a aussi pour objectif de fournir un tel procédé qui puisse être adapté en fonction de la qualité des eaux à traiter.

Un autre objectif de l'invention est de fournir un tel procédé qui soit simple de conception et facile à mettre en oeuvre.

Ces objectifs ainsi que d'autres qui apparaîtront par la suite sont atteints grâce à l'invention qui a pour objet un procédé de traitement des eaux en vue de leur épuration et/ou de leur potabilisation, du type comprenant, au moins une étape de mise en contact desdites eaux ladite étape pouvant être effectuée sous agitation (par tous moyens, notamment mécaniques ou injection d'air), avec au moins un réactif pulvérulent inorganique à forte surface spécifique, permettant d'abattre notamment la teneur en matières organiques ou en micro-polluants desdites eaux, et au moins une étape de séparation membranaire, caractérisé en ce qu'il comprend une étape de traitement des purges issues de ladite étape de séparation membranaire permettant de séparer lesdites purges en au moins deux fractions :
- une première fraction comprenant l'essentiel, c'est-à-dire plus de 60 % en masse, du réactif pulvérulent dans un petit débit d'eau, c'est-à-dire moins de 40 % de débit de purge, préférentiellement 20 % du débit de purge, qui contient des matières organiques et des micro-polluants ;
- une deuxième fraction comprenant, dans un débit d'eau plus important, préférentiellement 4 à 20 fois plus important que le petit débit cité ci-dessus, l'essentiel des matières organiques non adsorbées sur le réactif rejetées par les membranes et concentrées dans les purges,
ladite première fraction étant réinjectée dans lesdites eaux en amont de ladite étape de mise en contact desdites eaux avec ledit réactif pulvérulent.

Ladite seconde fraction, comportant l'essentiel des matières organiques non adsorbées sur le réactif, est préférentiellement évacuée soit à l'égout, soit vers un moyen de traitement spécifique, qui peut être par exemple un moyen de coagulation - floculation - décantation situé en amont de l'étape de mise en contact des eaux et du réactif pulvérulent ou tout autre mode de bassin ou cuve de décantation adaptée.

Ainsi, l'invention permet de recycler efficacement le réactif pulvérulent et donc d'optimiser son utilisation. Les coûts d'exploitation peuvent en conséquence être notablement réduits.

Dans une variante de l'invention, le réactif pulvérulent est utilisé comme support d'une biomasse, nitrifiante et/ou apte à traiter le carbone organique biodégradable se trouvant dans l'eau, et de l'air est injecté dans la zone de mise en contact des eaux avec le réactif pulvérulent. Cet air sert à fournir l'oxygène nécessaire à la biologie installée sur le support pulvérulent et à maintenir le réactif pulvérulent en suspension. Les membranes peuvent éventuellement être directement immergées dans la zone de mise en contact avec le réactif pulvérulent ou être situées dans une zone ultérieure.

Le traitement des purges composées d'un mélange de réactif pulvérulent dans de l'eau avec de la matière organique dissoute ou en suspension issue de la filtration membranaire, en vue de les diviser en deux fractions, permet de découpler les taux de recyclage de réactif pulvérulent et de matières organiques non absorbées sur le réactif.

La conséquence est que les capacités du réactif pulvérulent sont utilisées au mieux, les consommations en réactif pulvérulent pouvant alors être réduites.

En effet, en l'absence de séparation du réactif pulvérulent et des matières organiques non adsorbées sur le réactif avant recyclage du réactif pulvérulent, on recyclera dans le système une plus grande quantité de matière organique qui saturera d'autant plus vite les sites actifs du réactif, par exemple de charbon actif en poudre, et diminuera la capacité spécifique de ce réactif à traiter les micro-polluants pour lequel on l'utilise.

On note que l'on entend, dans le cadre de la description de la présente invention, par "réactif pulvérulent inorganique à forte surface spécifique", tout réactif en poudre susceptible de réagir avec l'un des composés présents dans les eaux à traiter (tel qu'un micro-polluant) soit par adsorption, soit par échange d'ions, en vue d'abattre la teneur de ces composés dans les eaux en question.

Selon une solution préférée, ledit réactif pulvérulent est du charbon actif en poudre.

Outre sa capacité à capter les matières organiques et à servir de support possible à une biomasse nitrifiante et/ou qui traite le Carbone Organique Dissous Biodégradable, le CAP est en effet particulièrement avantageux comme composé adsorbant les micro-polluants et en particulier les pesticides. Le CAP est donc particulièrement utile aux périodes de l'année durant lesquelles les eaux sont fortement chargées en ces composés, et notamment au printemps.

Selon d'autres modes de réalisation envisageables, le réactif pulvérulent pourra être choisi dans le groupe constitué par les zéolithes, les argiles et les résines échangeuses d'ions, ou comprendre un mélange de ces composés, en présence ou non du CAP.

Selon une solution avantageuse, ladite étape de traitement desdites purges comprend une étape de séparation hydraulique. Dans ce cas, ladite étape de séparation hydraulique est préférentiellement réalisée à l'aide d'au moins un hydrocyclone.

De tels moyens de séparation permettent en effet de récupérer en grande partie le réactif pulvérulent (au moins 60 % en masse pour des pressions raisonnables).

Dans un hydrocyclone, le débit de surverse représente classiquement 80 % du débit d'alimentation. Les 20 % restants sont évacués en souverse. Comme la matière organique dissoute n'est pas séparée dans ce type d'appareil, 80 % de celle-ci est évacuée en surverse et 20 % seulement retourne en souverse, adsorbée sur la majorité du CAP, renvoyée selon l'invention dans la cuve de contact des eaux avec le CAP, en amont de la filtration membranaire.

Selon une première approche, lesdites purges issues de ladite séparation membranaire sont recueillies en continu.

Selon une deuxième approche, lesdites purges issues de ladite séparation membranaire sont recueillies de façon périodique. Dans ce cas, la périodicité de recueil desdites purges est préférentiellement fonction de la concentration en réactif pulvérulent dans lesdites eaux présentes dans ladite étape de mise en contact desdites eaux avec ledit réactif pulvérulent.

Ainsi, en contrôlant la périodicité mais aussi le volume de ces purges, il est possible d'augmenter la concentration du CAP dans la cuve de contact, en vue notamment d'obtenir un effet tampon vis-à-vis des pesticides présents dans les eaux à traiter, ou encore de conserver dans la cuve de contact une concentration de biomasse suffisante pour traiter l'ammoniaque ou le carbone organique biodégradable.

Avantageusement, le procédé comprend au moins une étape d'extraction dudit réactif pulvérulent usagé. Dans ce cas, ladite étape d'extraction est préférentiellement réalisée en amont de ladite étape de séparation desdites purges.

On note qu'une purge de la cuve de contact des eaux avec le CAP est également envisageable, en vue notamment d'évacuer une partie du CAP usagé.

Selon une première variante, ladite étape de séparation membranaire est réalisée à l'aide de membranes sous pression.

Selon une variante préférée, ladite étape de séparation membranaire est réalisée à l'aide de membranes immergées, préférentiellement aérées de manière continue ou périodique.

Les membranes immergées ont en effet l'avantage d'induire une plus faible consommation d'énergie que les membranes sous pression. On contribue ainsi à réduire encore les coûts d'exploitation de l'installation mettant en oeuvre le procédé selon l'invention.

Selon un premier mode de réalisation, ladite deuxième fraction est évacuée.

Selon un deuxième mode de réalisation, ladite deuxième fraction est réinjectée dans lesdites eaux à traiter, en amont d'une étape de séparation gravitaire qui peut être prévue avant l'étape de mise en contact eau - réactif pulvérulent, pour y être traitée (avec apport éventuel de coagulant et/ou de floculant).

L'invention concerne également une installation pour la mise en oeuvre d'un procédé tel que décrit précédemment et comprenant au moins une cuve de contact desdites eaux avec un réactif pulvérulent inorganique à forte surface spécifique et au moins une unité de séparation membranaire, caractérisée en ce qu'elle comprend au moins une unité de séparation hydraulique des purges issues de ladite unité de séparation membranaire, ladite unité de séparation hydraulique permettant de séparer lesdites purges en au moins deux fractions :
- une première fraction comprenant l'essentiel, c'est-à-dire plus de 60 % en masse, du réactif pulvérulent dans un petit débit d'eau, c'est-à-dire moins de 40 % de débit de purge, préférentiellement 20 % du débit de purge, qui contient des matières organiques et des micro-polluants ;
- une deuxième fraction comprenant, dans un débit d'eau plus important, préférentiellement 4 à 20 fois plus important que le petit débit cité ci-dessus, l'essentiel des matières organiques non adsorbées sur le réactif rejetées par les membranes et concentrées dans les purges,
et en ce qu'elle comprend des moyens d'acheminement de ladite première fraction vers ladite cuve de contact.

Selon une solution préférée, ladite unité de séparation hydraulique comprend au moins un hydrocyclone.

En effet, comme indiqué précédemment, l'hydrocyclone est particulièrement efficace en ce qu'il permet de récupérer en grande partie le réactif pulvérulent.

Selon une première approche, ladite unité de séparation membranaire comprend au moins une cuve de filtration intégrant au moins une membrane immergée, préférentiellement munie de moyens d'aération sous les membranes.

Selon une deuxième approche, ladite unité de séparation membranaire comprend au moins une cuve de filtration intégrant au moins une membrane sous pression.

Avantageusement, ladite installation comprend une cuve de stockage desdites purges issues de ladite unité de séparation membranaire.

On obtient ainsi, à l'aide de cette cuve de stockage, un stock tampon des purges issues de l'unité de séparation membranaire permettant de traiter ces purges soit en continu soit de façon périodique.

Préférentiellement, ladite installation comprend des moyens d'extraction dudit réactif pulvérulent usagé.

De cette façon, on peut renouveler, si besoin, le réactif pulvérulent utilisé dans l'installation.

Dans ce cas, lesdits moyens d'extraction sont avantageusement prévus sur lesdits moyens d'acheminement et/ou sur ladite cuve de contact.

Selon une première variante, l'installation comprend des moyens d'évacuation de ladite deuxième fraction.

Selon une deuxième variante, l'installation comprend des moyens d'évacuation de ladite deuxième fraction.

Selon une deuxième variante, l'installation comprend des moyens d'acheminement de ladite deuxième fraction vers une unité de séparation gravitaire installée en amont de la cuve de contact des eaux et du ou des réactifs pulvérulents et disposant préférentiellement de moyens de coagulation et/ou de floculation avant séparation gravitaire.

Cette deuxième variante permet de limiter davantage la production d'effluents indésirables.

D'autres caractéristiques et avantages de l'invention apparaîtront plus clairement à la lecture de la description suivante d'un mode de réalisation préférentiel de l'invention, donné à titre d'exemple illustratif et non limitatif, et en référence à la figure unique qui présente de façon schématique une installation pour la mise en oeuvre d'un procédé de traitement des eaux selon l'invention.

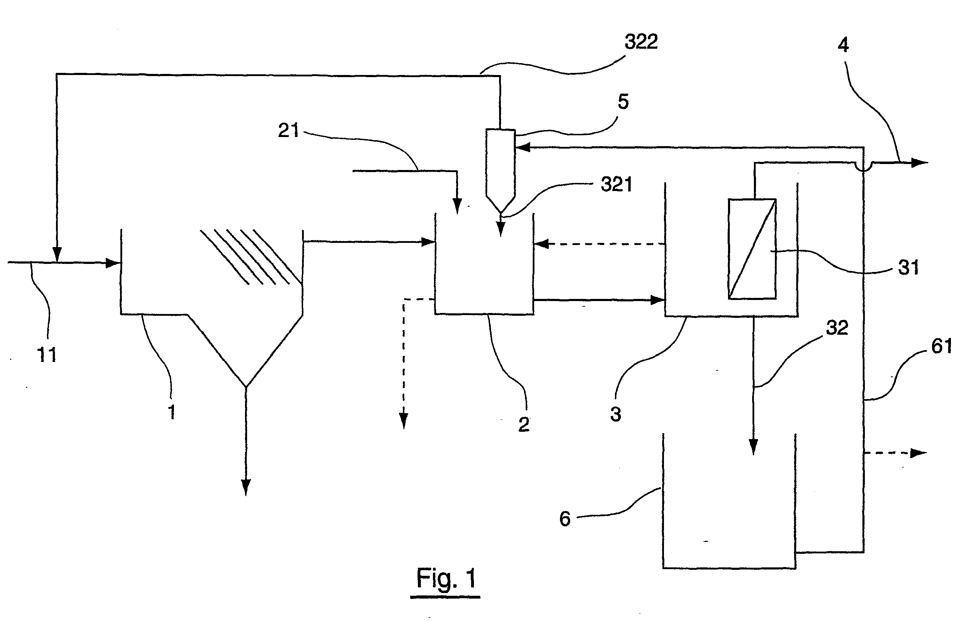

En référence à la figure 1, une installation pour la mise en oeuvre d'un procédé selon l'invention comprend :
- un clarificateur lamellaire 1, permettant la mise en oeuvre d'une étape de séparation gravitaire des eaux à traiter, avec ou sans apport de réactif coagulant ou floculant ;
- une cuve de contact 2, permettant la mise en oeuvre d'une étape de mise en contact des eaux avec du réactif pulvérulent (ici du CAP) ; Cette cuve de contact peut être agitée mécaniquement ou par insufflation d'air 7.
- une cuve de filtration 3, permettant la mise en oeuvre d'une étape de séparation membranaire à l'aide de membranes d'ultrafiltration ou de microfiltration 31.

On note que selon un mode de réalisation envisageable, une telle installation peut être placée après des équipements de coagulation, de décantation et de filtration permettant un pré-traitement de l'eau, notamment dans le cas d'un traitement d'une eau de surface.

Classiquement, l'eau à traiter est amenée vers la cuve 3, soit directement, soit via le clarificateur 1 par des moyens d'acheminement 11, la surverse du clarificateur 1 étant ensuite envoyée vers la cuve de contact 2, puis l'eau étant dirigée vers la cuve 3. L'eau passe ensuite dans les membranes immergées 31, l'eau ainsi traitée étant évacuée par une conduite 4.

On note que, selon une variante envisageable, la séparation membranaire pourrait être réalisée à l'aide de membranes sous pression.

Par ailleurs, selon un autre mode de réalisation envisageable, l'étape de mise en contact des eaux avec le CAP et l'étape de filtration membranaire pourraient être réalisées au sein d'un même réacteur, par exemple du type de celui décrit dans le brevet publié sous le numéro FR-2 737 202 au nom de la même Demanderesse que la présente demande.

Selon l'invention, les purges 32 issues de la séparation membranaire sont acheminées vers un hydrocyclone 5 à l'aide duquel elles sont séparées en deux fractions :
- une fraction 321 comprenant une faible partie du débit reçu, et l'essentiel du CAP ayant absorbé une partie des matières organiques, cette fraction 321 étant réintroduite dans la cuve de contact 3 ;
- une fraction 322, correspondant à la surverse de l'hydrocyclone 5, évacuant l'essentiel de l'eau qui contient des matières organiques dissoutes non adsorbées ou en suspension reçues par l'hydrocyclone.

Selon le présent mode de réalisation, cette fraction 322 est réintroduite au niveau des moyens d'acheminement 11 des eaux à traiter, et subit donc, à nouveau, un cycle de traitement complet pour récupérer un maximum d'eau tout en abattant les matières organiques, préférentiellement avec injection de réactifs coagulant et floculant.

Toutefois, selon un autre mode de réalisation envisageable, cette fraction 322 peut être évacuée de l'installation sans subir de nouveau traitement dans celle-ci.

Par ailleurs, tel que cela apparaît sur la figure 1, une cuve 6 de stockage des purges des membranes est prévue.

La purge de la cuve 3 peut ainsi être effectuée périodiquement, puis stockée et/ou dirigée vers l'hydrocyclone, en fonction de la concentration en CAP dans la cuve de contact 2.

On note que des purges d'extraction du CAP usagé sont prévues sur la conduite 61, en amont de l'hydrocyclone 5, et sur la cuve de contact 2.

Parallèlement, du CAP neuf peut être introduit dans la cuve de contact 2 à l'aide de moyens d'adjonction 21.

Pour mieux comprendre la présente invention, des essais comparatifs sur plusieurs jours ont été effectués, dont les résultats sont donnés ci-dessous sous forme de tableau, ces essais ont été réalisés sur de l'eau de Seine coagulée avec du WAC, décantée et filtrée sur sable à 15 m/h. Cette eau a ensuite été mélangée avec du CAP Picasorb 16.

| | Essai sans recirculation | Essai selon l'invention. |
|---|---|---|
| Taux CAP (ppm) | 10 | 10 |
| Matière organique entrée (mesure UV) | 4.3 | < 4.0 |
| Taux abattement de Matières Organiques (%) | 30 | 60-70 |
| Atrazine avant ajout CAP(ng/l) | 911 - 2000 | 1000-1800 |
| Atrazine après ajout CAP (ng/l) | 400 - 850 | Inférieur à 70 (limite de détection) |

## Revendications

1. Procédé de traitement des eaux en vue de leur épuration et/ou de leur potabilisation, du type comprenant au moins une étape de mise en contact desdites eaux avec au moins un réactif pulvérulent inorganique à forte surface spécifique, permettant d'abattre notamment la teneur en matières organiques desdites eaux, et au moins une étape de séparation membranaire,
**caractérisé en ce qu'**il comprend une étape de traitement des purges (32) issues de ladite étape de séparation membranaire permettant de séparer lesdites purges en au moins deux fractions :
- une première fraction comprenant l'essentiel, c'est-à-dire plus de 60 % en masse, du réactif pulvérulent dans un petit débit d'eau, c'est-à-dire moins de 40 % de débit de purge, préférentiellement 20 % du débit de purge, qui contient des matières organiques et des micro-polluants ;
- une deuxième fraction comprenant, dans un débit d'eau plus important, préférentiellement 4 à 20 fois plus important que le petit débit cité ci-dessus, l'essentiel des matières organiques non adsorbées sur le réactif rejetées par les membranes et concentrées dans les purges,
ladite première fraction (321) étant réinjectée dans lesdites eaux en amont de ladite étape de mise en contact desdites eaux avec ledit réactif pulvérulent.

2. Procédé de traitement des eaux selon la revendication 1, **caractérisé en ce que** ledit réactif pulvérulent est du charbon actif en poudre.

3. Procédé selon l'une quelconque des revendications 1 ou 2 **caractérisé en ce qu'**il comprend une étape de séparation gravitaire avant mise en contact avec ledit réactif pulvérulent.

4. Procédé selon la revendications 3 **caractérisé en ce que** ladite étape de séparation gravitaire est précédée d'une étape de floculation ou de coagulation-floculation.

5. Procédé selon l'une quelconque des revendications 1 à 4 **caractérisé en ce que** ledit réactif pulvérulent sert de support à une biomasse nitrifiante, de l'air étant injecté au cours de l'étape de mise en contact eau - réactif pulvérulent.

6. Procédé de traitement des eaux selon l'une quelconque des revendications 1 à 5 **caractérisé en ce que** ladite étape de traitement desdites purges comprend une étape de séparation hydraulique.

7. Procédé de traitement des eaux selon la revendication 6, **caractérisé en ce que** ladite étape de séparation est réalisée à l'aide d'au moins un hydrocyclone (5).

8. Procédé de traitement des eaux selon l'une quelconque des revendications 1 à 7, **caractérisé en ce que** lesdites purges (32) issues de ladite séparation membranaire sont recueillies en continu.

9. Procédé de traitement des eaux selon l'une quelconque des revendications 1 à 7, **caractérisé en ce que** lesdites purges (32) issues de ladite séparation membranaire sont recueillies de façon périodique.

10. Procédé de traitement des eaux selon la revendication 9, **caractérisé en ce que** la périodicité de recueil desdites purges (32) est fonction de la concentration en réactif pulvérulent dans lesdites eaux présentes dans ladite étape de mise en contact desdites eaux avec ledit réactif pulvérulent.

11. Procédé de traitement des eaux selon l'une quelconque des revendications 1 à 10, **caractérisé en ce qu'**il comprend au moins une étape d'extraction dudit réactif pulvérulent usagé.

12. Procédé de traitement des eaux selon la revendication 11, **caractérisé en ce que** ladite étape d'extraction est réalisée en amont de ladite étape de séparation desdites purges (32).

13. Procédé de traitement des eaux selon l'une quelconque des revendications 1 à 12, **caractérisé en ce que** ladite étape de séparation membranaire est réalisée à l'aide de membranes sous pression.

14. Procédé de traitement des eaux selon l'une quelconque des revendications 1 à 13, **caractérisé en ce que** ladite étape de séparation membranaire est réalisée à l'aide de membranes immergées (31).

15. Procédé de traitement des eaux selon l'une quelconque des revendications 1 à 14, **caractérisé en ce que** ladite deuxième fraction (322) est évacuée.

16. Procédé de traitement des eaux selon l'une quelconque des revendications 1 à 15, **caractérisé en ce que** ladite deuxième fraction (322) est réinjectée dans lesdites eaux à traiter, en amont de ladite étape de séparation gravitaire.

17. Installation pour la mise en oeuvre d'un procédé selon l'une quelconque des revendications 1 à 16, du type comprenant a au moins une cuve de contact (2) desdites eaux avec un réactif pulvérulent inorganique à forte surface spécifique et au moins une unité de séparation membranaire (3), **caractérisée en ce qu'**elle comprend au moins une unité de séparation hydraulique (5) des purges issues de ladite unité de séparation membranaire (3), ladite unité de séparation hydraulique (5) permettant de séparer lesdites purges en au moins deux fractions :
- une première fraction (321) comprenant l'essentiel, c'est-à-dire plus de 60 % en masse, du réactif pulvérulent dans un petit débit d'eau (c'est-à-dire moins de 40 % de débit de purge, préférentiellement 20 % du débit de purge) qui contient des matières organiques et des micro-polluants ;
- une deuxième fraction (322) comprenant, dans un débit d'eau plus important, préférentiellement 4 à 20 fois plus important que le petit débit cité ci-dessus, l'essentiel des matières organiques non adsorbées sur le réactif rejetées par les membranes et concentrées dans les purges.
et **en ce qu'**elle comprend des moyens d'acheminement (61) de ladite première fraction vers ladite cuve de contact (2).

18. Installation selon la revendication 17 **caractérisé en ce qu'**elle comprend une unité de séparation gravitaire située en amont de ladite cuve de contact (2).

19. Installation selon la revendication 18 **cacractérisée en ce qu**'elle comprend des moyens de coagulation et/ou de floculation prévus en amont de ladite unité de séparation gravitaire.

20. Installation selon l'une quelconque des revendications 17 à 19 **caractérisée en ce qu'**elle comprend des moyens d'injection d'air 7 permettant le maintien du réactif pulvérulent en suspension, la fourniture d'oxygène nécessaire à un traitement biologique et, éventuellement, le décolmatage des membranes si elles sont immergées dans ladite cuve de contact (2).

21. Installation selon l'une quelconque des revendications 17 à 20, **caractérisée en ce que** ladite unité de séparation hydraulique (5) comprend au moins un hydrocyclone.

22. Installation selon l'une quelconque des revendications 17 à 21, **caractérisée en ce que** ladite unité de séparation membranaire (3) comprend au moins une cuve de filtration intégrant au moins une membrane immergée.

23. Installation selon l'une quelconque des revendications 17 à 21, **caractérisée en ce que** ladite unité de séparation membranaire comprend au moins une cuve de filtration intégrant au moins une membrane sous pression.

24. Installation selon l'une quelconque des revendications 17 à 23, **caractérisée en ce qu'**elle comprend une cuve de stockage (6) desdites purges issues de ladite unité de séparation membranaire (3).

25. Installation selon l'une quelconque des revendications 17 à 24, **caractérisée en ce qu'**elle comprend des moyens d'extraction dudit réactif pulvérulent usagé.

26. Installation selon l'une quelconque des revendications 17 à 25, **caractérisée en ce que** lesdits moyens d'extraction sont prévus sur lesdits moyens d'acheminement (61) et/ou sur ladite cuve de contact (2).

27. Installation selon l'une quelconque des revendications 17 à 26, **caractérisée en ce qu'**elle comprend des moyens d'évacuation de ladite deuxième fraction (322).

28. Installation selon l'une quelconque des revendications 17 à 27, **caractérisée en ce qu'**elle comprend des moyens d'acheminement de ladite deuxième fraction (322) vers ladite unité de séparation gravitaire (1).

## Claims

1. Method of treating water for purification and / or drinkability, of the type comprising at least one step bringing the said water into contact with at least one inorganic powder reagent with high specific surface area, for reducing the content of organic matter in the said water, and at least one membrane separation step, **characterised in that** it comprises a step for treating the blow-off products (32) derived from the said membrane separation step to separate the said blow-off products into at least two fractions:
- a first fraction containing the major part of the powder reagent, in other words more than 60% by mass, in a low water flow rate, in other words less than 40% of the blow-off flow rate, preferably 20% of the blow-off flow rate, that contains organic matter and micro pollutants;
- a second fraction containing the major part of organic matter not adsorbed on the reagent rejected by the membranes and concentrated in the blow-off products, in a larger water flow rate, preferably 4 to 20 times more than the low flow rate mentioned above,
the said first fraction (321) being reinjected into the said water on the upstream side of the said step consisting of bringing the said water into contact with the said powder reagent.

2. Water treatment method according to claim 1, **characterised in that** the said powder reagent is Powdered Activated Carbon (PAC).

3. Method according to either claim 1 or 2, **characterised in that** it includes a gravity separation step that takes place before the step in which the water is brought into contact with the powder reagent.

4. Method according to claim 3, **characterised in that** the said gravity separation step is preceded by a flocculation or coagulation - flocculation step.

5. Method according to any one of claims 1 to 4, **characterised in that** the said powder reagent is used as a support for a nitrifying biomass, and air is injected during the step in which water is brought into contact with the powder reagent.

6. Water treatment method according to any one of claims 1 to 5, **characterised in that** said treatment step of the said blow-off products comprises a hydraulic separation step.

7. Water treatment method according to claim 6, **characterised in that** the said separation step is done using at least one hydrocyclone (5).

8. Water treatment method according to any one of claims 1 to 7, **characterised in that** the said blow-off products (32) derived from the said membrane separation are collected continuously.

9. Water treatment method according to any one of claims 1 to 7, **characterised in that** the said blow-off products (32) derived from the said membrane separation are collected periodically.

10. Water treatment method according to claim 9, **characterised in that** the interval at which the said blow-off products (32) are collected depends on the concentration of powder reagent in the said water present in the said step in which the said water is brought into contact with the said powder reagent.

11. Water treatment method according to any one of claims 1 to 10, **characterised in that** it comprises at least one step for extraction of the said used powder reagent.

12. Water treatment method according to claim 11, **characterised in that** the said extraction step is done on the upstream side of the said separation step of the said blow-off products (32).

13. Water treatment method according to any one of claims 1 to 12, **characterised in that** the said membrane separation step is done using pressurised membranes.

14. Water treatment method according to any one of claims 1 to 13, **characterised in that** the said membrane separation step is performed using immersed membranes (31).

15. Water treatment method according to any one of claims 1 to 14, **characterised in that** the said second fraction (322) is evacuated.

16. Water treatment method according to any one of claims 1 to 15, **characterised in that** the said second fraction (322) is reinjected into the said water to be treated, on the upstream side of the said gravity separation step.

17. Installation for use of a process according to any one of claims 1 to 16, of the type comprising at least one tank (2) in which the said water is brought into contact with an inorganic powder reagent with high specific surface area and at least one membrane separation unit (3), **characterised in that** it comprises at least one hydraulic separation unit (5) for blow-off products derived from the said membrane separation unit (3), the said hydraulic separation unit (5) separating the said blow-off products into at least two fractions:
- a first fraction (321) containing the major part of the powder reagent (in other words more than 60% by mass) in a low water flow rate (in other words less than 40% of the blow-off flow rate, preferably 20% of the blow-off flow rate) that contains organic matter and micro pollutants;
- a second fraction (322) containing the major part of organic matter not adsorbed on the reagent rejected by the membranes and concentrated in the blow-off products, in a larger water flow rate, preferably 4 to 20 times more than the low flow rate mentioned above,
and **in that** it comprises means (61) of conveyance of the said first fraction to the said contact tank (2).

18. Installation according to claim 17, **characterised in that** it comprises a gravity separation unit installed on the upstream side of the said contact tank (2).

19. Installation according to claim 18, **characterised in that** it is provided with coagulation and / or flocculation means on the upstream side of the said gravity separation unit.

20. Installation according to any one of claims 17 to 19, **characterised in that** it comprises air injection means 7 to maintain the powder reagent in suspension, the oxygen supply necessary for a biological treatment and possibly for unblocking membranes if they are immersed in the said contact tank (2).

21. Installation according to any one of claims 17 to 20, **characterised in that** the said hydraulic separation unit (5) comprises at least a hydrocyclone.

22. Installation according to any one of claims 17 to 21, **characterised in that** the said membrane separation unit (3) comprises at least one filtration tank integrating at least one immersed membrane.

23. Installation according to any one of claims 17 to 21, **characterised in that** the said membrane separation unit comprises at least one filtration tank integrating at least one pressurised membrane.

24. Installation according to any one of claims 17 to 23, **characterised in that** it comprises a tank (6) for storage of the said blow-off products derived from the said membrane separation unit (3).

25. Installation according to any one of claims 17 to 24, **characterised in that** it comprises means of extracting the said used powder reagent.

26. Installation according to any one of claims 17 to 25, **characterised in that** the said extraction means are provided on the said conveyance means (61) and / or the said contact tank (2).

27. Installation according to any one of claims 17 to 26, **characterised in that** it comprises means for evacuating the said second fraction (322).

28. Installation according to any one of claims 17 to 27, **characterised in that** it comprises means of conveyance of the said second fraction (322) to the said gravity separation unit (1).

## Patentansprüche

1. Verfahren zur Behandlung von Wasser im Hinblick auf dessen Reinigung und/oder Aufbereitung als Trinkwasser, des Typs, der mindestens einen Schritt der Zusammenführung des besagten Wassers mit mindestens einem feinpulvrigen anorganischen Reagens mit großer spezifischer Oberfläche, das insbesondere die Verringerung des Gehalts an organischen Stoffen im besagten Wasser ermöglicht, und mindestens einen Schritt der Membrantrennung umfasst,
**dadurch gekennzeichnet, dass** es einen Schritt der Behandlung der aus dem besagten Schritt der Membrantrennung stammenden Schlämme (32) umfasst, der die Trennung der besagten Schlämme in mindestens zwei Fraktionen ermöglicht:
- eine erste Fraktion, die den Hauptteil umfasst, das heißt, massenmäßig mehr als 60%, feinpulvriges Reagens in einer kleinen Wassermenge, das heißt weniger als 40% Schlammmenge, vorzugsweise 20% Schlammmenge, die organische Stoffe und Mikroschadstoffe enthält;
- eine zweite Fraktion, die in einer größeren Wassermenge, vorzugsweise 4 bis 20 mal größer als die oben genannte kleine Menge, den Hauptteil der nicht vom Reagens absorbierten, durch die Membranen abgeschiedenen und in den Schlämmen konzentrierten organischen Stoffe umfasst,
wobei die besagte erste Fraktion (321) vor dem besagten Schritt der Zusammenführung des besagten Wassers mit dem besagten feinpulvrigen Reagens wiedereingespritzt wird.

2. Verfahren zur Wasserbehandlung gemäß Anspruch 1, **dadurch gekennzeichnet, dass** das besagte feinpulvrige Reagens Aktivkohlepulver ist.

3. Verfahren gemäß einem der Ansprüche 1 oder 2, **dadurch gekennzeichnet, dass** es vor der Zusammenführung mit dem besagten feinpulvrigen Reagens einen Schritt der Schwerkrafttrennung umfasst.

4. Verfahren gemäß Anspruch 3, **dadurch gekennzeichnet, dass** dem besagten Schritt der Schwerkrafttrennung ein Schritt der Flockung oder Koagulation-Flockung vorausgeht.

5. Verfahren gemäß einem der Ansprüche 1 bis 4, **dadurch gekennzeichnet, dass** das besagte feinpulvrige Reagens als Träger für eine nitrifizierende Biomasse dient, und durch Luft, die während des Schritts der Zusammenführung von Wasser und feinpulvrigem Reagens eingespritzt wird.

6. Verfahren zur Wasserbehandlung gemäß einem der Ansprüche 1 bis 5, **dadurch gekennzeichnet, dass** der besagte Schritt der Behandlung der besagten Schlämme einen Schritt der hydraulischen Trennung umfasst.

7. Verfahren zur Wasserbehandlung gemäß Anspruch 6, **dadurch gekennzeichnet, dass** der besagte Schritt der Trennung mit Hilfe mindestens eines Hydrozyklons (5) erfolgt.

8. Verfahren zur Wasserbehandlung gemäß einem der Ansprüche 1 bis 7, **dadurch gekennzeichnet, dass** die besagten, aus der besagten Membrantrennung stammenden Schlämme (32) kontinuierlich aufgefangen werden.

9. Verfahren zur Wasserbehandlung gemäß einem der Ansprüche 1 bis 7, **dadurch gekennzeichnet, dass** die besagten, aus der besagten Membrantrennung stammenden Schlämme (32) in regelmäßigen Zeitabständen aufgefangen werden.

10. Verfahren zur Wasserbehandlung gemäß Anspruch 9, **dadurch gekennzeichnet, dass** die Zeitabstände beim Auffangen der besagten Schlämme von der Konzentration des feinpulvrigen Reagens im besagten Wasser abhängen, das im besagten Schritt der Zusammenführung des besagten Wassers mit dem besagten feinpulvrigen Reagens vorhanden ist.

11. Verfahren zur Wasserbehandlung gemäß einem der Ansprüche 1 bis 10, **dadurch gekennzeichnet, dass** es mindestens einen Schritt der Extraktion des besagten verbrauchten feinpulvrigen Reagens umfasst.

12. Verfahren zur Wasserbehandlung gemäß Anspruch 11, **dadurch gekennzeichnet, dass** der besagte Extraktionsschritt vor dem besagten Schritt der Trennung der besagten Schlämme (32) erfolgt.

13. Verfahren zur Wasserbehandlung gemäß einem der Ansprüche 1 bis 12, **dadurch gekennzeichnet, dass** der besagte Schritt der Membrantrennung mit Hilfe von Membranen unter Druck erfolgt.

14. Verfahren zur Wasserbehandlung gemäß einem der Ansprüche 1 bis 13, **dadurch gekennzeichnet, dass** der besagte Schritt der Membrantrennung mit Hilfe von versenkten Membranen (31) erfolgt.

15. Verfahren zur Wasserbehandlung gemäß einem der Ansprüche 1 bis 14, **dadurch gekennzeichnet, dass** die besagte zweite Fraktion (322) abgeleitet wird.

16. Verfahren zur Wasserbehandlung gemäß einem der Ansprüche 1 bis 15, **dadurch gekennzeichnet, dass** die besagte zweite Fraktion (322) vor dem besagten Schritt der Schwerkrafttrennung wieder in das zu behandelnde Wasser eingespritzt wird.

17. Anlage zur Durchführung eines Verfahrens gemäß einem der Ansprüche 1 bis 16, des Typs, der mindestens einen Kontaktbehälter (2) zur Zusammenführung des besagten Wassers mit einem feinpulvrigen anorganischen Reagens mit großer spezifischer Oberfläche und mindestens eine Einheit zur Membrantrennung (3) aufweist, **dadurch gekennzeichnet, dass** sie mindestens eine Einheit zur hydraulischen Trennung (5) der aus der besagten Einheit zur Membrantrennung (3) stammenden Schlämme umfasst, wobei die besagte Einheit zur hydraulischen Trennung (5) die Trennung der besagten Schlämme in mindestens zwei Fraktionen ermöglicht:
- eine erste Fraktion (321), die den Hauptteil umfasst, das heißt, massenmäßig mehr als 60%, feinpulvriges Reagens in einer kleinen Wassermenge (das heißt, weniger als 40% Schlammmenge, vorzugsweise 20% Schlammmenge), die organische Stoffe und Mikroschadstoffe enthält;
- eine zweite Fraktion (322), die in einer größeren Wassermenge, vorzugsweise 4 bis 20 mal größer als die oben genannte kleine Menge, den Hauptteil der nicht vom Reagens absorbierten, von den Membranen abgeschiedenen und in den Schlämmen konzentrierten organischen Stoffe umfasst;
und **dadurch**, dass sie Mittel zur Beförderung (61) der besagten ersten Fraktion in Richtung des besagten Kontaktbehälters (2) umfasst.

18. Anlage gemäß Anspruch 17, **dadurch gekennzeichnet, dass** sie eine Einheit zur Schwerkrafttrennung aufweist, die sich vor dem besagten Kontaktbehälter (2) befindet.

19. Anlage gemäß Anspruch 18, **dadurch gekennzeichnet, dass** sie Mittel zur Koagulation und/oder Flockung aufweist, die vor der besagten Einheit zur Schwerkrafttrennung vorgesehen werden.

20. Anlage gemäß einem der Ansprüche 17 bis 19, **dadurch gekennzeichnet, dass** sie Mittel zum Einspritzen von Luft (7) aufweist, die das Halten des feinpulvrigen Reagens in Suspension, die Versorgung mit dem für eine biologische Behandlung notwendigen Sauerstoff und eventuell die Reinigung der Membranen ermöglichen, wenn diese im besagten Kontaktbehälter (2) versenkt werden.

21. Anlage gemäß einem der Ansprüche 17 bis 20, **dadurch gekennzeichnet, dass** die besagte Einheit zur hydraulischen Trennung (5) mindestens einen Hydrozyklon aufweist.

22. Anlage gemäß einem der Ansprüche 17 bis 21, **dadurch gekennzeichnet, dass** die besagte Einheit zur Membrantrennung (3) mindestens einen Filterbehälter mit mindestens einer versenkten Membran aufweist.

23. Anlage gemäß einem der Ansprüche 17 bis 21, **dadurch gekennzeichnet, dass** die besagte Einheit zur Membrantrennung mindestens einen Filterbehälter mit mindestens einer Membran unter Druck aufweist.

24. Anlage gemäß einem der Ansprüche 17 bis 23, **dadurch gekennzeichnet, dass** sie einen Behälter (6) für die Lagerung der besagten, aus der Einheit zur Membrantrennung (3) stammenden Schlämme aufweist.

25. Anlage gemäß einem der Ansprüche 17 bis 24, **dadurch gekennzeichnet, dass** sie Mittel zur Extraktion des besagten verbrauchten feinpulvrigen Reagens aufweist.

26. Anlage gemäß einem der Ansprüche 17 bis 25, **dadurch gekennzeichnet, dass** die besagten Extraktionsmittel an den besagten Beförderungsmitteln (61) und/oder am besagten Kontaktbehälter (2) vorgesehen werden.

27. Anlage gemäß einem der Ansprüche 17 bis 26, **dadurch gekennzeichnet, dass** sie Mittel zur Ableitung der besagten zweiten Fraktion (322) aufweist.

28. Anlage gemäß einem der Ansprüche 17 bis 27, **dadurch gekennzeichnet, dass** sie Mittel zur Beförderung der besagten zweiten Fraktion (322) in Richtung der Einheit zur Schwerkrafttrennung (1) aufweist.
